# EUROPÄISCHE PATENTANMELDUNG

(11) **EP 4 497 616 A1**
(43) Veröffentlichungstag der Anmeldung: **29.01.2025**
(21) Anmeldenummer: 24182137.0
(22) Anmeldetag: 14.06.2024
(51) Int. Cl.: B60J 5/12, B60J 5/14

(54) **KASTENFÖRMIGER FAHRZEUGAUFBAU, INSBESONDERE FÜR EIN TIEFKÜHLFAHRZEUG**

(30) Priorität: 24.07.2023 DE 102023119501
(71) Anmelder: WIHAG Fahrzeugbausysteme GmbH, 33602 Bielefeld (DE)
(72) Erfinder: KOTTKAMP, Uwe, 32312 Lübbecke (DE)
(74) Vertreter: Dantz, Jan Henning

(57) **Zusammenfassung**

Ein kastenförmiger Fahrzeugaufbau, insbesondere für ein Tiefkühlfahrzeug, mit einem durch gedämmte Wände begrenzten Laderaum, der eine Öffnung aufweist, die durch ein Sektionaltor (1) verschließbar ist, das eine Vielzahl verschwenkbar miteinander verbundener Paneele (2) aufweist, die in Laufschienen (5) geführt sind, ist so ausgebildet, dass die Laufschienen (5) durch nutartige Vertiefungen in sich gegenüberliegenden und über die Höhe der Öffnung erstreckenden Laufschienenträgern ausgebildet sind, die jeweils mit ihrer zugeordneten Außenseite mit der Außenseite des geschlossenen Sektionaltores (1) fluchten.

## Beschreibung

Die Erfindung betrifft einen kastenförmigen Fahrzeugaufbau, insbesondere für ein Tiefkühlfahrzeug nach dem Oberbegriff des Anspruchs 1.

Derartige Fahrzeugaufbauten, die vor allem dem Transport von Tiefkühlware dienen, sind hinlänglich bekannt. Charakteristisch für solche Fahrzeugaufbauten ist eine Dämmung der Wände, insbesondere der Seitenwände sowie des eine Zugangsöffnung des Laderaumes verschließendes Sektionaltores.

Dieses Sektionaltor, das eine Vielzahl verschwenkbar, miteinander verbundener Paneele aufweist, ist in Laufschienen geführt, die an einem die Öffnung begrenzenden Heckrahmen angeordnet sind und zwar an der dem Laderaum zugewandten Seite. Dabei weisen die Paneele endseitig Laufrollen auf, die entlang der Laufschienen bei Betätigung des Sektionaltores abrollen.

Nachteilig bei dieser Konstruktion ist jedoch, dass die lichte Breite der Öffnung gegenüber der lichten Breite des Laderaumes reduziert ist, was die Beschickung des Laderaumes erschwert.

Auch die nutzbare Länge des Laderaumes ist durch die Anordnung der Laufschiene, die als separate Führungsleiste ausgebildet ist, reduziert, was ebenfalls einer optimalen Beladung des Fahrzeugaufbaus entgegensteht.

Darüber hinaus wird der Rücksprung des geschlossenen Sektionaltores gegenüber dem Rahmen in hinsichtlich der außenseitigen Ansicht vielfach als störend empfunden.

Der Erfindung liegt die Aufgabe zugrunde, einen kastenförmigen Fahrzeugaufbau so weiterzuentwickeln, dass sein Laderaum insgesamt vergrößert wird.

Diese Aufgabe wird durch einen kastenförmigen Fahrzeugaufbau mit den Merkmalen des Anspruchs 1 gelöst.

Durch die Erfindung ergeben sich gegenüber dem Stand der Technik wesentliche Vorteile insbesondere hinsichtlich der Nutzung des Laderaums des Fahrzeugaufbaus.

Bei einer Ausführungsvariante sind die Laufschienen in den Seitenwänden angeordnet, so dass nunmehr das lichte Breitenmaß der Öffnung dem lichten Breitenmaß des Laderaumes entspricht, woraus sich zum einen eine deutlich leichtere Beschickung des Laderaums ergibt und zum anderen die Nutzfläche des Laderaumes größer ist als bei einem solchen nach dem Stand der Technik.

Dies ergibt sich gleichermaßen bei einer weiteren Ausführung der Erfindung, bei der der Laufschienenträger durch die Seitenholme eines Heckrahmens gebildet werden. In diesem Fall kann überdies der Heckrahmen eine verrutschte, gegen das Sektionaltor drückende Ladung, abstützen

Durch das weitere kennzeichnende Merkmal der Erfindung, wonach der Laufschienenträger bei geschlossenem Sektionaltor mit den Außenseiten der Paneele fluchtet, ergibt sich eine Verbesserung der Gesamtansicht, da die Heckansicht als durchgehend geschlossene, planebene Fläche wahrgenommen wird.

Nach einem weiteren Gedanken der Erfindung ist vorgesehen, dass die jeweilige Laufschiene in einem Seitenwandsegment angeordnet ist, das mit der benachbarten Seitenwand fest verbunden ist, beispielsweise durch Verkleben.

Die Laufschiene ist durch eine nutartige, vorzugsweise im Querschnitt U-förmige Vertiefung des Laufschienenträgers ausgebildet, wobei die sozusagen Außenhaut des Laufschienenträgers als Blechformteil hergestellt und mit Dämmmaterial ausgefüllt ist, entsprechend der Seitenwand.

Zum fluchtenden Übergang der Außenseite der Paneele mit den zugeordneten Schmalseiten der Laufschienenträger weist jedes Paneel außenseitig im Stirnseitenbereich eine Ausklinkung auf, in der eine Nase der Schmalseite des Laufschienenträgers bei geschlossenem Sektionaltor einliegt.

In gleicher Weise ist eine fluchtende Ausbildung im Bereich einer oberen Abschlusskante der Öffnung vorgesehen, die eine sich über die Breite der Öffnung erstreckende vertikal ausgerichtete Schürze aufweist, die in einer Ausklinkung an der Oberkante des oberen Paneels ebenfalls außenseitig vorgesehen ist, in der die Schürze mit einem zugewandten Kantenbereich einliegt, wobei sich dann mit der Außenseite des Paneels und der Außenseite der Schürze eine fluchtende Konstellation ergibt.

Durch diese fluchtende Ausbildung im oberen Randbereich des oberen Paneels mit der Schürze sowie des Laufschienenträgers mit dem Paneel, ergibt sich nicht nur eine gefällige, als nicht störend anzusehende Außenansicht der Heckseite des Fahrzeugaufbaus, sondern überdies eine dämmende Abdichtung, wobei Dichtungsmaßnahmen im gemeinsamen Überdeckungsbereich vorgesehen sein können.

Auch kann jede Laufschiene auf der dem Laderaum zugewandten Seite hinter dem Heckrahmen angeordnet sein. Durch die Ausklinkung der Paneele beziehungsweise des Heckrahmens sowie der Schürze ist die Laufschiene dicht am Heckrahmen angeordnet.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Öffnung eines kastenförmigen Fahrzeugaufbaus verschließendes Sektionaltor in einer geschlossenen Stellung

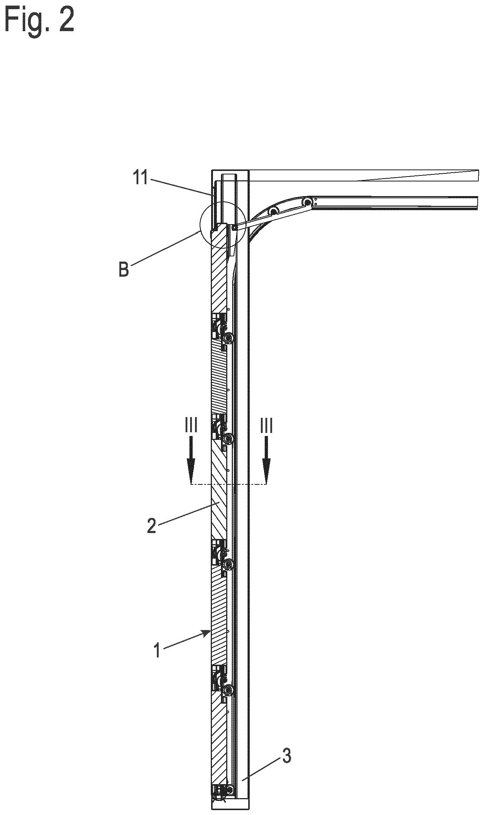

- Figur 2: einen Schnitt durch das Sektionaltor gemäß der Linie II-II in Figur 1
- Figur 3: einen Ausschnitt des Sektionaltores in einer geschnittenen Draufsicht, gemäß der Linie III-III in Figur 2
- Figur 4: einen vergrößerten Ausschnitt der Figur 3 gemäß der Angabe A in Figur 3
- Figur 5: einen vergrößerten Ausschnitt des Sektionaltores entsprechend der Angabe B in Figur 2.

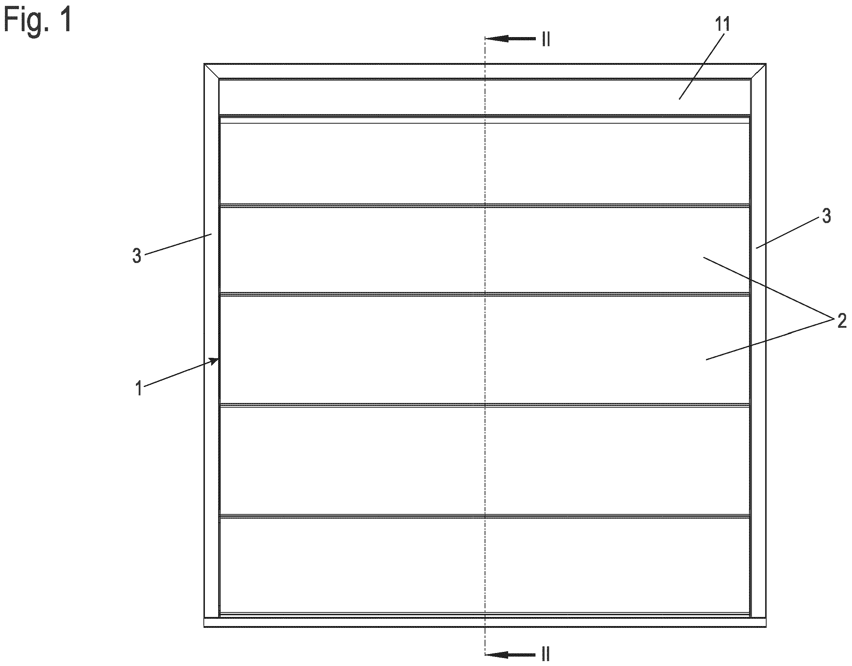

In der Figur 1 ist die Heckansicht eines kastenförmigen Fahrzeugaufbaus, insbesondere für ein Tiefkühlfahrzeug, abgebildet, mit einem Sektionaltor 1, das eine Öffnung des Fahrzeugaufbaus verschließt, wie im Beispiel dargestellt.

Gedämmte Seitenwände begrenzen seitlich einen Laderaum, während eine Öffnung zum Laderaum durch einen Heckrahmen begrenzt ist, von dem Seitenholme 3 erkennbar sind.

Das Sektionaltor 1 besteht aus einer Vielzahl verschwenkbar miteinander verbundener Paneele 2, die in Laufschienen 5 längs verschieblich geführt sind, wobei die Paneele 2 an ihren Stirnseiten mit Laufrollen 6 versehen sind, die in den Laufschienen 5 gelagert sind.

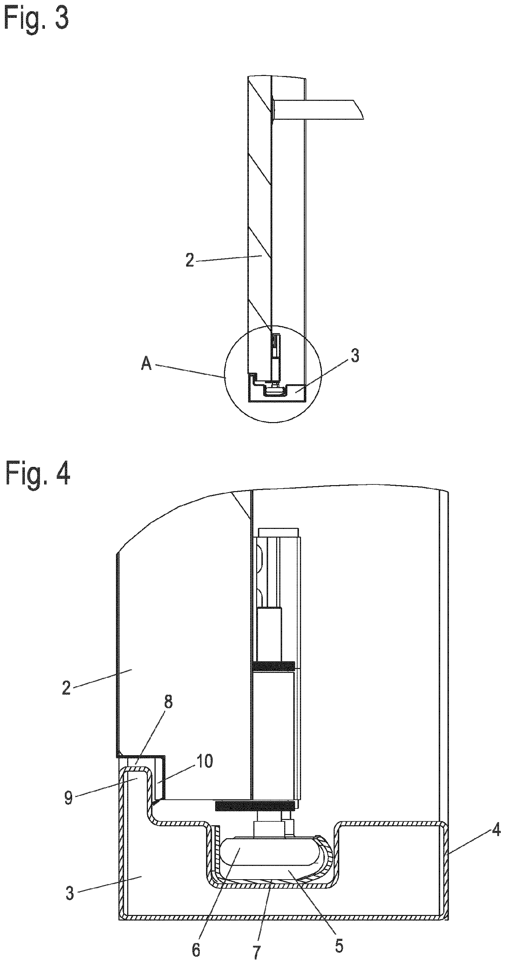

Gemäß einer Variante der Erfindung sind die Laufschienen 5 in den Seitenholmen 3 angeordnet und im Querschnitt U-förmig ausgebildet wie besonders deutlich in der Figur 4 erkennbar ist.

Die Laufschiene 5 ist ausgekleidet mit einem Sicherungsprofil 7, das einseitig die zugeordnete Laufrolle 6 übergreift und somit eine sichere Führung der Laufrolle 6 gewährleistet.

Nach der Erfindung fluchten die zugeordneten Außenseiten der Seitenholme 3 mit den Außenseiten der Paneele 2, wozu diese außenseitig und im äußeren Randbereich eine Ausklinkung 8 aufweisen, in die jeweils eine Nase 9 des Seitenwandsegments 3 ragt.

In der Figur 4, die einen vergrößerten Ausschnitt A in diesem Bereich wiedergibt, ist zu erkennen, dass zwischen der Nase 5 und einer der Flächen der Ausklinkung 8 eine Dichtung 10 angeordnet ist.

Der Seitenholm 3 ist durch ein Blechformteil 4 ummantelt, wobei das Sicherungsprofil 7 ebenfalls aus Blech gebildet ist.

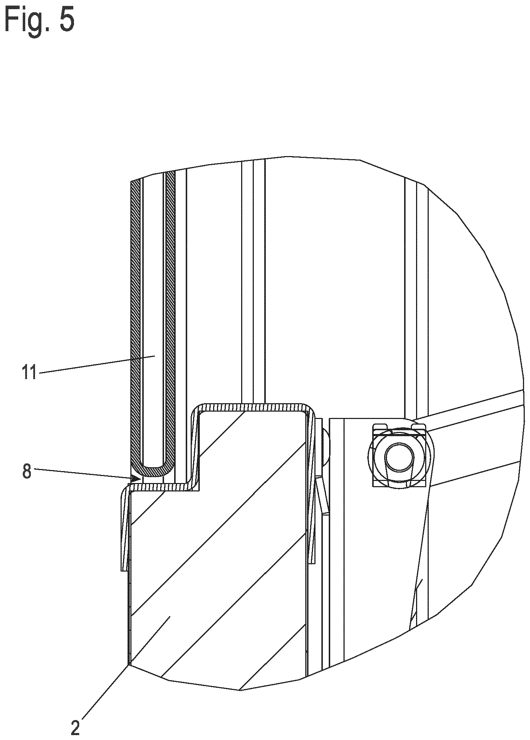

In der Figur 5, die einen vergrößerten Ausschnitt B des Sektionaltores 1 wiedergibt, ist der obere Rand eines oberen Paneels 2 zur Außenseite hin ebenfalls mit einer Ausklinkung 8 versehen, in die eine am oberen Rand der Öffnung positionierte Schürze 11 derart ragt, dass das Paneel 2 mit der Außenseite der Schürze 11 fluchtet, womit in Zusammenschau mit den Seitenholmen 3 oder den Seitenwänden, eine im Wesentlichen planebene Fläche des Fahrzeugaufbaus gebildet ist.

### Bezugszeichenliste

- 1: Sektionaltor
- 2: Paneel
- 3: Seitenholm
- 4: Blechformteil
- 5: Laufschiene
- 6: Laufrolle
- 7: Sicherungsprofil
- 8: Ausklinkung
- 9: Nase
- 10: Dichtung
- 11: Schürze

## Patentansprüche

1. Kastenförmiger Fahrzeugaufbau, insbesondere für ein Tiefkühlfahrzeug, mit einem durch gedämmte Wände begrenzten Laderaum, der eine Öffnung aufweist, die durch ein Sektionaltor (1) verschließbar ist, das eine Vielzahl verschwenkbar miteinander verbundener Paneele (2) aufweist, die in Laufschienen (5) geführt sind, **dadurch gekennzeichnet, dass** die Laufschienen (5) durch nutartige Vertiefungen in sich gegenüberliegenden und über die Höhe der Öffnung erstreckenden Laufschienenträgern ausgebildet sind, die jeweils mit ihrer zugeordneten Außenseite mit der Außenseite des geschlossenen Sektionaltores (1) fluchten.

2. Kastenförmiger Fahrzeugaufbau nach Anspruch 1, **dadurch gekennzeichnet, dass** die Laufschienenträger durch die Seitenwände oder durch Seitenholme (3) eines Heckrahmens gebildet sind.

3. Kastenförmiger Fahrzeugaufbau nach Anspruch 1 oder 2, **dadurch gekennzeichnet, dass** jede Laufschiene (5) auf der dem Laderaum zugewandten Seite hinter dem Heckrahmen angeordnet ist.

4. Kastenförmiger Fahrzeugaufbau nach Anspruch 1, **dadurch gekennzeichnet, dass** jede Laufschiene (5) in einem Seitenwandsegment (3) der jeweiligen Seitenwand vorgesehen ist.

5. Kastenförmiger Fahrzeugaufbau nach Anspruch 1 oder 2, **dadurch gekennzeichnet, dass** das jeweilige Paneel (2) auf seiner dem Laufschienenträger (3) zugewandten Stirnseite eine sich über die vertikale Breite des Paneels (2) erstreckende Ausklinkung (8) aufweist, in die eine Nase (9) des Laufschienenträgers ragt.

6. Kastenförmiger Fahrzeugaufbau nach einem der vorhergehenden Ansprüche, **dadurch gekennzeichnet, dass** die Nase (9) die Ausklinkung (8) weitgehend ausfüllt.

7. Kastenförmiger Fahrzeugaufbau nach einem der vorhergehenden Ansprüche, **dadurch gekennzeichnet, dass** in der Ausklinkung (8) mindestens eine Dichtung (10) angeordnet ist.

8. Kastenförmiger Fahrzeugaufbau nach einem der vorhergehenden Ansprüche, **dadurch gekennzeichnet, dass** eine im oberen Randbereich der Öffnung angeordnete Schürze (11) in eine Ausklinkung (8) der zugeordneten Paneele (2) derart ragt, dass die Außenseite des Paneels (2) und die Außenseite der Schürze (11) fluchten.

9. Kastenförmiger Fahrzeugaufbau nach einem der vorhergehenden Ansprüche, **dadurch gekennzeichnet, dass** die Nase (9) die Ausklinkung (8) der Paneele (2) weitgehend ausfüllt.
